# EUROPÄISCHE PATENTSCHRIFT

(11) **EP 3 450 948 B1**
(45) Veröffentlichungstag und Bekanntmachung des Hinweises auf die Patenterteilung: **15.12.2021**
(21) Anmeldenummer: 17189161.7
(22) Anmeldetag: 04.09.2017
(51) Int. Cl.: G01L 1/22, G01G 23/01

(54) **KRAFTMESSEINRICHTUNG**
FORCE MEASURING DEVICE
DISPOSITIF DYNAMOMÉTRIQUE

(43) Veröffentlichungstag der Anmeldung: 06.03.2019
(73) Patentinhaber: GTM Testing and Metrology GmbH, 64404 Bickenbach (DE)
(72) Erfinder: SCHWIND, Daniel, 55234 Wendelsheim (DE); MÜLLER, Markus, 64293 Darmstadt (DE)
(74) Vertreter: Habermann Intellectual Property Partnerschaft von Patentanwälten mbB

(56) Entgegenhaltungen:
- EP-A1- 0 098 790
- EP-A1- 0 338 325
- WO-A1-00/75617
- DE-A1- 3 912 218
- JP-A- H09 178 579
- US-A- 3 427 875

## Beschreibung

Die Erfindung betrifft eine Kraftmesseinrichtung zur Erfassung einer in eine Krafthauptrichtung auf die Kraftmesseinrichtung einwirkenden Druckkraft mit einem rotationssymmetrischen Kraftmesskörper, wobei ein äußerer Kraftausleitungsring über einen die Verformungsmesselemente tragenden Verformungskörper mit einem inneren Krafteinleitungselement verbunden ist, und wobei das innere Krafteinleitungselement eine Krafteinleitungsfläche aufweist, auf der ein erstes Ende eines stabförmigen Kraftübertragungselements kraftübertragend derart angeordnet ist, dass ein dem ersten Ende gegenüberliegendes zweites Ende des Kraftübertragungselements entgegen der Krafthauptrichtung von dem inneren Krafteinleitungselement absteht und eine auf das zweite Ende des Kraftübertragungselements einwirkende Druckkraft über die Krafteinleitungsfläche auf den Kraftmesskörper übertragen kann, wobei längs einer in der Krafthauptrichtung durch das innere Krafteinleitungselement verlaufenden Mittenachse zwei oder mehr Radialstützelemente jeweils beabstandet voneinander und beabstandet von dem inneren Krafteinleitungselement angeordnet sind, welche in axialer Richtung biegeelastisch und in radialer Richtung verformungssteif ausgebildet sind, wobei die Radialstützelemente kraftübertragend an dem Kraftübertragungselement anliegen, sich radial nach außen erstrecken und an einem radial äußeren Ende kraftübertragend an einem starr mit dem äußeren Kraftausleitungsring verbundenen Stützkörper festgelegt sind, so dass die Radialstützelemente einem Verkippen des Kraftübertragungselements aus der Mittenachse entgegenwirken.

Beispielsweise aus DE 10 2006 025 509 A1 sind Druckkraftaufnehmer bekannt, mit welchen eine auf den Druckkraftaufnehmer ausgeübte Druckkraft gemessen werden kann. Ein derartiger Druckkraftaufnehmer kann mit einfachen konstruktiven Maßnahmen und mit einem geringen Fertigungsaufwand hergestellt werden und trotz eines vergleichsweise geringen Bauraums eine für viele Anwendungen ausreichende Messgenauigkeit erreichen. Derartige Druckkraftaufnehmer können zur Bestimmung von Masse- bzw. Gewichtskräften verwendet werden, die im Wesentlichen längs einer Krafthauptrichtung auf die Kraftmesseinrichtung ausgeübt werden. In der Praxis werden solche Druckkraftaufnehmer beispielsweise bei Fahrzeugwaagen oder Schwerlastwaagen eingesetzt, um das Gesamtgewicht eines auf einer Messplattform stehenden Fahrzeugs oder einer großen Last ermitteln zu können.

Beispielsweise aus DE 10 2006 024 385 A1 oder DE 10 2007 019 180 A1 sind Kraftmesseinrichtungen bekannt, mit welchen nicht nur die in einer Krafthauptrichtung auf die Kraftmesseinrichtung eindrückenden Kraftkomponenten gemessen werden können, sondern auch Kraftkomponenten erfasst und bestimmt werden können, die in einer von der Krafthauptrichtung abweichenden Richtung auf die Kraftmesseinrichtung einwirken. Mit derartigen Mehrkomponenten-Krafteinrichtungen können auch die in der Praxis nahezu unvermeidlich auftretenden Querkräfte erfasst werden, die den Kraftkomponenten entsprechen, die senkrecht zu der Krafthauptrichtung gerichtet sind und bei einer in einem Winkel zur Krafthauptrichtung auf die Kraftmesseinrichtung ausgeübte Kraft erzeugt werden. In Kenntnis einer solchen Querkraftkomponente oder sogar sämtlicher Kraftkomponenten kann die Präzision einer solchen Kraftmesseinrichtung verbessert werden, indem ausgehend von dem erfassten Messwert die für den jeweiligen Anwendungsfall relevante Kraftgröße berechnet wird.

Beispielsweise bei der in DE 10 2007 019 180 A1 beschriebenen Mehrkomponenten-Kraftmesseinrichtung ist die Geometrie des rotationssymmetrischen Kraftmesskörpers und insbesondere die Geometrie des Verformungskörpers derart vorgegeben, dass eine im Wesentlichen voneinander entkoppelte Bestimmung der längs der Krafthauptrichtung ausgeübten Kraft einerseits und der gegebenenfalls auftretenden Querkräften andererseits begünstigt wird. Der für die Bestimmung der Kraftkomponente in der Krafthauptrichtung vorgesehene Verformungskörper weist einen konzentrisch um eine Mittelachse angeordneten Biegering auf, weshalb derartige Kraftmesseinrichtungen auch als Biegering-Kraftmesseinrichtung bezeichnet werden können.

Bei einer Fahrzeugwaage wird eine relativ zu dem Untergrund verlagerbare Messplattform, auf welcher das zu wiegende Fahrzeug positioniert werden kann, regelmäßig über mehrere Kraftmesseinrichtungen gegenüber einem Untergrund abgestützt. Die Messplattform muss dann derart mit den Kraftmesseinrichtungen verbunden sein, dass einer horizontalen Verlagerung der Messplattform entgegengewirkt wird, wie sie beispielsweise bei einer ungleichmäßigen Belastung der Messplattform oder aber während eines Abbremsens oder Beschleunigens des Fahrzeugs vor und nach einem Messvorgang auftreten. Bei Verwendung von eingangs genannten Druckkraftaufnehmern können die konvexen Stirnflächen der Druckkraftaufnehmer beispielsweise in daran angepassten Pfannen an der Unterseite der Messplattform gelagert oder durch geeignet ausgebildete Ausnehmungen bzw. vorspringende Begrenzungsringe an der Unterseite der Messplattform in einer jeweils vorgesehenen Messposition fixiert werden. Bei den Mehrkomponenten-Kraftmesseinrichtungen mit einem Biegering als Verformungskörper ist es aus der Praxis bekannt, in dem inneren Krafteinleitungselement eine topfartige Ausnehmung vorzugeben, in welchem ein erstes Ende eines stabförmigen Kraftübertragungselements kraftübertragend angeordnet ist, so dass ein dem ersten Ende gegenüberliegendes zweites Ende des Kraftübertragungselements entgegen der Krafthauptrichtung von dem inneren Krafteinleitungselement absteht und eine auf das zweite Ende des Kraftübertragungselement einwirkende Druckkraft auf den Kraftmessgang übertragen kann. Die Messplattform wird dann jeweils auf dem zweiten Ende des Kraftübertragungselements aufgelegt und über eine geeignete Anzahl von derartigen Kraftmesseinrichtungen gegenüber dem Untergrund abgestützt.

Das Kraftübertragungselement kann innerhalb vorgegebener Grenzen bzw. Winkelbereiche verkippen und dadurch eine horizontale Verlagerung der Messplattform ausgleichen. Durch eine geeignete Rückstelleinrichtung für die einzelnen Kraftübertragungselemente kann erreicht werden, dass die Messplattform während eines Messvorgangs nicht ausgelenkt ist, sondern sich in einer vorgebenen Messposition befindet. Derartige Kraftmesseinrichtungen werden in der Praxis auch als Pendelstützen-Kraftaufnehmer bezeichnet.

Eine Fahrzeugwaage muss vor Beginn der ersten Nutzung und auch im Anschluss daran üblicherweise in regelmäßigen Abständen kalibriert werden. Zu diesem Zweck kann eine möglichst präzise vorgegebene Kraft auf die Messplattform ausgeübt werden und das Messergebnis der Fahrzeugwaage mit der präzise vorgegebenen Krafteinwirkung verglichen werden. Um eine solche Kalibrierung durchzuführen werden regelmäßig temporär errichtete und hydraulisch betriebene Druckzylinder auf der Messplattform angeordnet und neben der Messplattform verankert, so dass mit den Druckzylindern eine möglichst präzise vorgebbare Druckkraft auf die Messplattform ausgeübt werden kann. In dem durch die Druckzylinder auf die Messplattform ausgeübten Kraftfluss wird dann eine geeignete Messkraftmesseinrichtung angeordnet, um die mit den Druckzylindern ausgeübte Druckkraft erfassen und für die Kalibration verwenden zu können. Aus der Praxis ist es bekannt, dass Fahrzeugwaagen mit Hilfe von Kraftmesseinrichtungen der eingangs genannten Gattung kalibriert werden.

Es hat sich jedoch herausgestellt, dass beispielsweise auf Grund der nur seitlich neben der Messplattform möglichen Verankerung der Druckzylinder bei einer Druckbelastung nahezu unvermeidlich auch Querkräfte auftreten, welche die Ermittlung der längs der Krafthauptrichtung senkrecht auf die Messplattform einwirkende Druckkraft beeinträchtigt, wodurch die Kalibration erschwert werden kann. Hinzu kommt, dass die in der Praxis üblicherweise verwendeten Kraftmesseinrichtungen regelmäßig auf der Messplattform festgelegt werden müssen, um im Falle von Querkräften ein seitliches Verrutschen zu verhindern. Die während einer Kalibrationsmessung auf die Messplattform ausgeübten Querkräfte führen dann zu einer erzwungenen horizontalen Auslenkung der Messplattform, wodurch ebenfalls die Genauigkeit der Kalibration beeinträchtigt werden kann. Eine quer zu der Krafthauptrichtung gerichtete Verlagerung der Messplattform bzw. einer mit der Messplattform verbundenen Komponente der Kraftmesseinrichtung, die durch die auftretenden Querkräfte verursacht wird, wird regelmäßig als störend empfunden und soll nach Möglichkeit vermieden werden.

Beispielsweise aus EP 0 338 325 A1 oder DE 39 12 218 A1 sind Kraftmesseinrichtungen mit einem Krafteinleitungselement bekannt, bei denen die zu messende Kraft mit einem Kraftübertragungselement auf einen Krafteinleitungsbereich des Krafteinleitungselements übertragen wird. Dabei ist der Krafteinleitungsbereich in einem Innenraum der Kraftmesseinrichtung angeordnet, in welchen das das Kraftübertragungselement hineinragt. Mit einem Faltenbalg oder einer Membran wird eine Öffnung des Innenraums, durch welche das Kraftübertragungselement hineinragt, von Umgebungseinflüssen abgeschirmt. Dabei wird auch eine Stabilisierung des Kraftübertragungselements gegenüber einer seitlichen Verkippung bewirkt. Allerdings können ein Faltenbalg oder eine Membran nicht verhindern, dass Querkräfte über das Kraftübertragungselement auf den Kraftübertragungsbereich übertragen werden und die Messung beeinflussen.

Es wird deshalb als eine Aufgabe der vorliegenden Erfindung angesehen, eine Kraftmesseinrichtung der eingangs genannten Gattung so auszugestalten, dass eine quer zu der Krafthauptrichtung auf die Kraftmesseinrichtung ausgeübte Kraftkomponente nicht über den Verformungskörper hinweg übertragen wird und eine möglichst präzise Erfassung der in der Krafthauptrichtung auf die Kraftmesseinrichtung einwirkenden Druckkraft ermöglicht wird.

Diese Aufgabe wird erfindungsgemäß dadurch gelöst, dass jedes der zwei oder mehr Radialstützelemente einen inneren Festlegungsring und einen äußeren Festlegungsring aufweist, die über in radialer Richtung verlaufende Verbindungsstege miteinander verbunden sind. Der innere Festlegungsring dient der Verbindung des Radialstützelements mit dem Kraftübertragungselement. Der innere Festlegungsring kann beispielsweise klemmend oder über einen Schraubgewindeeingriff mit dem Kraftübertragungselement verbunden sein. Der äußere Festlegungsring dient der Verbindung des Radialstützelements mit dem in geeigneter Weise ausgestalteten Stützkörper. Der Stützkörper kann dabei beispielsweise eine Rahmenkonstruktion sein, welche das längs der Mittenachse angeordnete Kraftübertragungselement umgibt, oder auch eine konzentrisch um das Kraftübertragungselement angeordnete Hülse sein. Der äußere Kraftfestlegungsring kann in geeigneter Weise ausgestaltete Festlegungsmittel zur Befestigung des äußeren Festlegungsrings an dem Stützkörper aufweisen. Die Befestigung kann beispielsweise klemmend in einer an dem Stützkörper ausgebildeten, in radialer Richtung umlaufenden Nut erfolgen. Es ist ebenfalls denkbar, dass der äußere Festlegungsring auf einem ringförmigen Flansch angeordnet und verschraubt ist.

Die in radialer Richtung verlaufenden Verbindungsstege sind in vorteilhafter Weise so dimensioniert und ausgelegt, dass das Radialstützelement in radialer Richtung wirkende Querkräfte über die Verbindungsstege von dem inneren Festlegungsring auf den äußeren Festlegungsring übertragen kann und eine Verlagerung des mit dem inneren Festlegungsring verbundenen Kraftübertragungselements in radialer Richtung unterdrückt bzw. verhindert wird. Gleichzeitig sollen die Verbindungsstege zweckmäßigerweise in axialer Richtung möglichst biegeelastisch sein und keine größeren Rückstellkräfte erzeugen, die einer axialen Verlagerung des Kraftübertragungselements in der Krafthauptrichtung entgegenwirken.

Durch die in axialer Richtung in einem Abstand zu dem Verformungskörper angeordneten Radialstützelemente werden gegebenenfalls auf das zweite Ende des Kraftübertragungselements einwirkende Querkräfte aufgenommen und auf den Stützkörper der Kraftmesseinrichtung übertragen, so dass eventuell auftretende Querkräfte nicht oder jedenfalls nicht mit einem nennenswerten Anteil auf den Verformungskörper einwirken und dadurch die Erfassung der in der Krafthauptrichtung auf den Verformungskörper einwirkenden Druckkraft beeinträchtigen kann. Zudem wird durch die Radialstützelemente ein Verkippen des Kraftübertragungselements aus der Mittenachse reduziert oder nahezu vollständig verhindert, sodass das Kraftübertragungselement eine quer zu der Krafthauptrichtung einwirkende Querkraftkomponente nicht oder jedenfalls nur ganz erheblich reduziert auf das Krafteinleitungslement übertragen kann. Auf diese Weise kann mit einfachen konstruktiven Mitteln eine präzise Kraftmessung mit der erfindungsgemäßen Kraftmesseinrichtung ermöglicht werden. Gleichzeitig kann eine quer zu der Krafthauptrichtung auf die Kraftmesseinrichtung ausgeübte Querkraftkomponente über die Radialstützelemente und den Stützkörper abgetragen werden, so dass keine nennenswerten Querkräfte auf den Verformungskörper ausgeübt werden und auch der Stützkörper der Kraftmesseinrichtung keine nennenswerten Querkräfte ableiten muss, die eine quer zu der Krafthauptrichtung gerichtete Verlagerung des Stützkörpers und damit des an dem Stützkörper abgestützten Verformungskörpers bewirken könnten.

Eine gegebenenfalls geringe Querkraftkomponente kann in der Praxis beinahe zu jeder Kraftbeaufschlagung des zweiten Endes des Kraftübertragungselements erzeugt werden, die nicht exakt in der Krafthauptrichtung auf die Kraftmesseinrichtung bzw. auf das Kraftübertragungselement einwirkt, wie es in der Praxis häufig der Fall ist. Da eine auf das Kraftübertragungselement ausgeübte Querkraftkomponente durch die in radialer Richtung verformungssteif ausgebildeten Radialstützelemente abgetragen wird und deshalb nicht auf das an dem ersten Ende des stabförmigen Kraftübertragungselements kraftübertragend angeordnete innere Krafteinleitungselement des Verformungskörpers übertragen wird, ist der Verformungskörper von gegebenenfalls auftretenden Querkräften weitgehend entkoppelt. Da das Radialstützelement, welches das Kraftübertragungselement in radialer Richtung abstützt, in axialer Richtung biegeelastisch ausgebildet ist, wird die in der Krafthauptrichtung auf das Kraftübertragungselement einwirkende Druckkraft kaum beeinträchtigt oder verändert. Eine Verformung des Verformungskörpers wird demzufolge nahezu ausschließlich über die in der Krafthauptrichtung auf die Kraftmesseinrichtung einwirkende Druckkraft verursacht. Eine unerwünschte Verlagerung der Kraftmesseinrichtung bzw. des Verformungskörpers quer zu der Krafthauptrichtung wird vermieden.

Das Radialstützelement ist in axialer Richtung biegeelastisch und in radialer Richtung verformungssteif, wenn eine Verformung des Radialstützelements in axialer Richtung mit erheblich geringerem Kraftaufwand als in radialer Richtung möglich ist. Das Radialstützelement soll bei einer axialen Verlagerung des Kraftübertragungselements möglichst geringe Rückstellkräfte auf das Kraftübertragungselement ausüben, jedoch einer radialen Verlagerung bzw. einem Verkippen des Kraftübertragungselements möglichst großen Widerstand entgegensetzen.

Gemäß einer optionalen Ausgestaltung des Erfindungsgedankens zufolge ist vorgesehen, dass der rotationssymmetrische Kraftmesskörper einstückig ausgebildet ist. Auf diese Weise kann eine Beeinträchtigung der Kraftübertragung durch Fügestellen und nachträgliche Verbindungen zwischen dem inneren Krafteinleitungselement, dem Verformungskörper und dem Kraftausleitungsring vermieden werden.

Es ist weiterhin vorteilhaft, dass die Krafteinleitungsfläche in einer Ausnehmung in dem inneren Krafteinleitungselement angeordnet ist. Die Ausnehmung kann topfartig ausgebildet sein und von einer in axialer Richtung vorspringenden ringförmigen Umwandung begrenzt sein. Die Abmessungen der Ausnehmung, deren Bodenfläche die Krafteinleitungsfläche bildet, und der umgebenden Umwandung sind derart an die Abmessungen des stabförmigen Kraftübertragungselements angepasst, dass das Kraftübertragungselement im dem ersten Ende in der topfartigen Ausnehmung so aufgenommen und dabei auf der Krafteinleitungsfläche abgestützt sein kann, dass das Kraftübertragungselement eine in der Krafthauptrichtung einwirkende Kraft auf die Krafteinleitungsfläche übertragen kann und gleichzeitig seitlich von der ringförmigen Umwandung geführt ist, sodass das Kraftübertragungselement nicht seitlich wegrutschen kann.

Gemäß einer Ausgestaltung des Erfindungsgedankens ist vorgesehen, dass der Verformungskörper einen mit dem äußeren Kraftausleitungring verbundenen äußeren Ringsteg aufweist, der mit einem Dehnungsmesselemente tragenden Biegering verbunden ist, der wiederum über einen inneren Ringsteg mit dem inneren Krafteinleitungselement verbunden ist, wobei der äußere Ringsteg und der innere Ringsteg jeweils ein Biegegelenk bilden, und wobei ausgehend von dem inneren Krafteinleitungselement der innere Ringsteg, der Biegering, der äußere Ringsteg und der äußere Kraftausleitungsring jeweils mit zunehmendem radialen Abstand konzentrisch um die Mittenachse angeordnet sind. Eine derartige Formgebung und Ausgestaltung des Verformungskörpers hat sich in der Praxis bewährt und erlaubt im Vergleich zu anders ausgestalteten Verformungskörpern eine präzise Erfassung einer auf das innere Krafteinleitungselement ausgeübten Kraft. Ein derartiger rotationssymmetrischer Verformungskörper lässt sich mit einfachen Mitteln einstückig herstellen und kann robust bzw. unempfindlich gegenüber Erschütterungen oder Umwelteinflüssen ausgestaltet sein. Zudem eignet sich ein derartiger Verformungskörper in besonderer Weise für die Erfassung einer Kraftkomponente, die längs der Mittenachse auf das innere Krafteinleitungselement einwirkt, während ein derartiger Verformungskörper relativ unempfindlich gegenüber in radialer Richtung auf den Verformungskörper mit seinen konzentrisch angeordneten Komponenten einwirkende Querkraftkomponente ist.

Durch zwei Radialstützelemente, die beabstandet voneinander an dem Kraftübertragungselement anliegen und das Kraftübertragungselement in radialer Richtung abstützen, kann bereits ein unerwünschtes Verkippen des Kraftübertragungselements weitgehend ausgeschlossen werden. Es können dann kaum noch nennenswerte Querkräfte, die an dem zweiten Ende auf das Kraftübertragungselement einwirken, über das Kraftübertragungselement auf den am ersten Ende kraftübertragend angeordneten Verformungsköper bzw. auf das das stabförmige Kraftübertragungselement aufnehmende innere Krafteinleitungselement des Verformungskörpers übertragen werden. Da die zwei Radialstützelemente oder die mehreren Radialstützelemente in axialer Richtung biegeelastisch ausgebildet sind und bei einer in der Krafthauptrichtung auf das Kraftübertragungselement einwirkenden Druckkraft keine größeren Rückstellkräfte in axialer Richtung erzeugen, wird die angestrebte präzise Erfassung der Druckkraft kaum beeinträchtigt.

In vielen Fällen dürften bereits zwei beabstandet voneinander angeordnete Radialstützelemente ausreichen, um das Kraftübertragungselement in ausreichender Weise gegen ein unerwünschtes Verkippen abzustützen und zu sichern. In Abhängigkeit von der Ausgestaltung der einzelnen Radialstützelemente und dem vorgesehenen Messbereich der Kraftmesseinrichtung kann es für bestimmte Anwendungen jedoch zweckmäßig sein, drei, vier oder noch mehr Radialstützelemente vorzusehen, die jeweils beabstandet voneinander eine Zwangsführung für das Kraftübertragungselement bilden.

Das Radialstützelement kann beispielsweise aus einem flachen, ebenen Blechzuschnitt hergestellt werden. Die einzelnen Aussparungen, welche in radialer Richtung zwischen dem inneren Festlegungsring und dem äußeren Festlegungsring und in Umfangsrichtung zwischen benachbarten Verbindungsstegen angeordnet sind, können beispielsweise durch Ausstanzen oder Laserschneiden herausgetrennt werden. Auf diese Weise kann mit geringem Herstellungsaufwand erreicht werden, dass das Radialstützelement von einer flachen Scheibe mit darin angeordneten Ausnehmungen gebildet wird. Es ist ebenfalls denkbar, dass das Radialstützelement von einer kreisförmigen und der Mitte gelochten Membran gebildet wird. Die Membran kann aus einem geeigneten Material, beispielsweise aus Metall oder einem Faserverbundmaterial hergestellt sein. Der innere Festlegungsring und der äußere Festlegungsring können gegebenenfalls zusätzliche Verstärkungs- und Festlegungselemente aufweisen.

In vorteilhafter Weise ist optional vorgesehen, dass die Kraftmesseinrichtung ein Gehäuse aufweist, wobei das Gehäuse einen Gehäuseboden aufweist und der äußere Kraftausleitungsring des Kraftmesskörpers auf dem Gehäuseboden festgelegt ist, und wobei das Gehäuse eine den Kraftmesskörper umgebende Gehäusewand aufweist, die starr mit dem Gehäuseboden verbunden ist und den Stützkörper zur Festlegung des mindestens einen Radialstützelements bildet. Das Gehäuse kann eine topfartige Formgebung aufweisen. Die den Kraftmesskörper umgebende Gehäusewand kann hülsenartig ausgebildet sein und eine im Wesentlichen hohlzylindrische, rotationssymmetrische Formgebung aufweisen. Die Gehäusewand kann sich in axialer Richtung über den Kraftmesskörper und über einen großen Bereich des Kraftübertragungselements hinweg erstrecken, so dass lediglich das zweite Ende des Kraftübertragungselements über eine Oberkante der Gehäusewand hinausragt. Auf diese Weise bildet das Gehäuse einen effektiven Schutz der Kraftmesseinrichtung vor einer übermäßigen äußeren Beanspruchung. Das Gehäuse kann einstückig ausgebildet sein. Es ist ebenfalls denkbar und hinsichtlich der Herstellungsmöglichkeiten vorteilhaft, dass der Gehäuseboden und die Gehäusewand getrennt hergestellt und anschließend starr miteinander verbunden werden. Der Gehäuseboden ist auf einer einem Innenraum des Gehäuses zugewandten Oberseite so ausgebildet, dass der Verformungskörper in geeigneter Weise auf dem Gehäuseboden angeordnet und über den äußeren Kraftausleitungsring fest mit dem Gehäuseboden verbunden werden kann. Eine der Oberseite des Gehäusebodens gegenüberliegende Unterseite des Gehäusebodens kann entweder im Wesentlichen eben ausgebildet sein oder eine üblicherweise mittig angeordnete, in axiale Richtung vorspringende Aufstandsfläche für das Gehäuse bzw. für die Kraftmesseinrichtung aufweisen.

Um einen zusätzlichen Schutz der Kraftmesseinrichtung vor Umwelteinflüssen zu ermöglichen ist optional vorgesehen, dass das Gehäuse einen Gehäusedeckel mit einer Aussparung aufweist, durch welche das zweite Ende des Kraftübertragungselements hinausragt. Das Kraftübertragungselement kann beispielsweise über elastische Ringdichtungen in der Aussparung des Gehäusedeckels positioniert sein, wobei durch die elastische Ringdichtung der Innenraum des Gehäuses abgedichtet wird und gleichzeitig eine zusätzliche elastische Rückstellwirkung gegen ein Verkippen des Kraftübertragungselements erzeugt wird.

Es ist ebenfalls möglich, dass das aus dem Gehäuse herausragende zweite Ende des Kraftübertragungselements mit einer zusätzlichen Kappe bedeckt ist. Die Kappe kann an die Abmessungen des Gehäuses angepasst sein. An einer dem zweiten Ende des Kraftübertragungselements abgewandten Außenseite kann die Kappe eine Anlagefläche aufweisen, die eine Krafteinleitung einer von außen einwirkenden Druckkraft begünstigt, um eine möglichst präzise Erfassung der Druckkraft zu erlauben. Die Kappe kann starr oder lose aufliegend mit dem zweiten Ende des Kraftübertragungselements verbunden sein.

Es ist grundsätzlich denkbar, dass das Kraftübertragungselement einstückig mit dem Kraftmesskörper ausgebildet ist. Im Hinblick auf die angestrebte Entkopplung von in radialer Richtung wirkenden Querkräften ist vorzugsweise vorgesehen, dass das Kraftübertragungselement gesondert von dem Kraftmesskörper hergestellt ist und sich mit einer an dem ersten Ende ausgebildeten Stirnfläche kraftübertragend an der Krafteinleitungsfläche an dem inneren Krafteinleitungselement abstützt. Die Krafteinleitungsfläche kann in vorteilhafter Weise eine Bodenfläche sein, die in einer Vertiefung bzw. in einer Ausnehmung in dem inneren Krafteinleitungselement angeordnet ist. Das innere Krafteinleitungselement kann beispielsweise eine topfartige Formgebung aufweisen. Das Kraftübertragungselement kann über elastische Ringdichtungen oder über elastische Verformungselemente in radialer Richtung an einer die Bodenfläche umgebenden Innenwandung des inneren Krafteinleitungselements abgestützt sein. Über die Stirnfläche ist das Krafteinleitungselement unmittelbar auf der Krafteinleitungsfläche bzw. gegebenenfalls der Bodenfläche des inneren Krafteinleitungselements abgestützt.

Vorzugsweise ist das Kraftübertragungselement lose auf der Krafteinleitungsfläche aufgesetzt und eine das Kraftübertragungselement im Bereich des ersten Endes umgebende Innenwandung ausreichend beabstandet, so dass bei den während eines Messvorgangs üblicherweise auftretenden mechanischen Belastungen und Verformungen das Kraftübertragungselement nicht seitlich bzw. in radialer Richtung unmittelbar mit dem inneren Krafteinleitungselement in Kontakt kommt, so dass keine nennenswerten Querkräfte auf das innere Krafteinleitungselement und damit auf den Kraftmesskörper bzw. den Verformungskörper übertragen werden können. Das Kraftübertragungselement kann auf Grund seiner Anordnung in der Kraftmessvorrichtung und insbesondere wegen der über die Radialstützelemente erfolgenden radialen Abstützung nicht verkippen und deshalb nicht die Funktion einer Pendelstütze übernehmen, die bei einigen Anwendungen in Kombination mit ähnlichen Kraftmesskörpern eingesetzt wird, um beispielsweise durch ein Verkippen des Krafteinleitungselements eine quer zu der Krafthauptrichtung erfolgende Verlagerung eines Probenkörpers oder einer Messplattform auszugleichen, die mit der aus der Praxis bekannten Kraftmesseinrichtung mit einer derartigen Pendelstütze in Wirkverbindung stehen.

Das Kraftübertragungselement kann in vorteilhafter Weise an seinem zweiten Ende eine konvex gekrümmte Stirnfläche aufweisen. In gleicher Weise kann das Kraftübertragungselement auch an seinem ersten Ende eine konvex gekrümmte Stirnfläche aufweisen. In beiden Fällen wird durch die konvex gekrümmte Stirnfläche erreicht, dass durch Querkraftkomponenten, die während eines Messvorgangs gegebenenfalls auftreten, die Messergebnisse nicht übermäßig beeinträchtigt werden.

Nachfolgend werden Ausführungsbeispiele des Erfindungsgedankens näher erläutert, die in der Zeichnung dargestellt sind. Es zeigt:
Fig. 1 ein aus dem Stand der Technik bekanntes Verfahren zur Kalibration einer Fahrzeugwaage, wobei ein herkömmlicher, aus dem Stand der Technik bekannter Kraftaufnehmer für die Kalibration verwendet wird,
Fig. 2 ein vergleichbares Verfahren zur Kalibration der Fahrzeugwaage, wobei eine erfindungsgemäße Kraftmesseinrichtung verwendet wird,

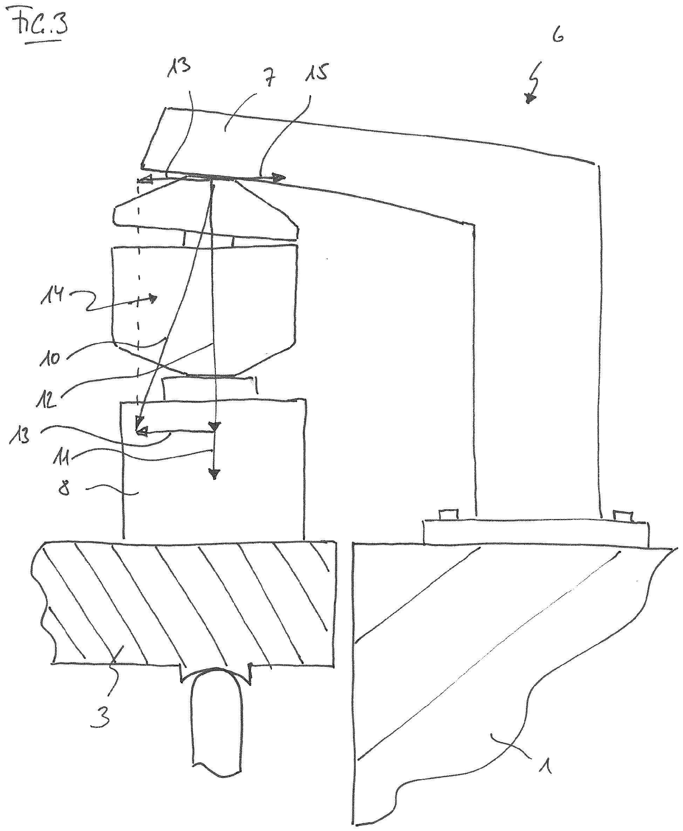

Fig. 3 eine vergrößert und stark überhöht dargestellte Teilansicht eines Ausschnitts III in Figur 2 mit einer Abbildung der erfindungsgemäßen Kraftmesseinrichtung während der Durchführung eines Kalibrationsvorgangs, und
Fig. 4 eine Schnittansicht durch die in den Fig. 2 und 3 dargestellte erfindungsgemäße Kraftmesseinrichtung.

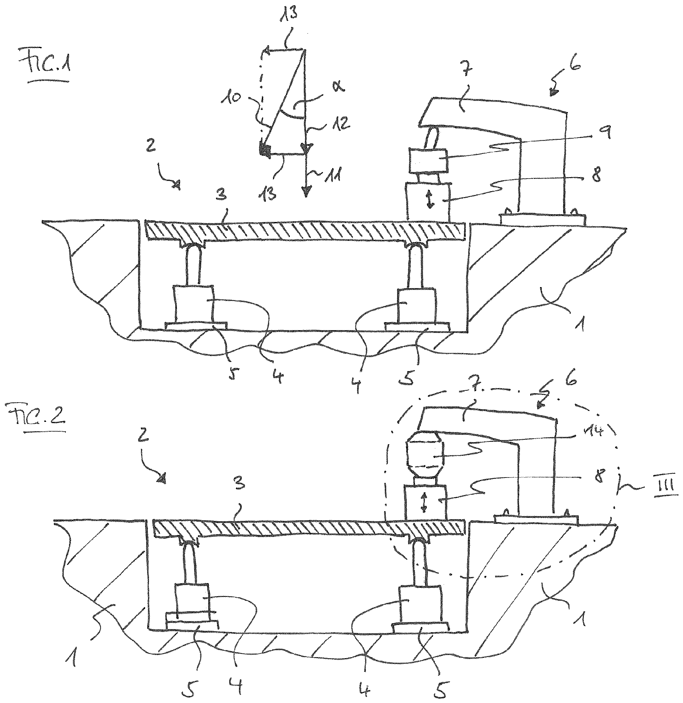

In den Fig. 1 und 2 ist jeweils eine in einen Untergrund 1 eingelassene Fahrzeugwaage 2 dargestellt. Eine niveaugleich mit dem angrenzenden Untergrund 1 angeordnete Messplattform 3 ist über herkömmliche Kraftaufnehmer 4 auf einem mit dem Untergrund 1 verbundenen Fundament 5 abgestützt. Wenn sich ein in den Figuren nicht dargestelltes Fahrzeug auf der Messplattform 3 befindet, werden die Kraftaufnehmer 4 durch die Gewichtskraft des Fahrzeugs belastet und können das Gewicht des Fahrzeugs erfassen. Die von den einzelnen Kraftaufnehmern 4 gelieferten Messwerte können mit einer ebenfalls nicht dargestellten Verarbeitungseinrichtung zusammengeführt werden, um das Gewicht des auf der Messplattform 3 befindlichen Fahrzeugs zu ermitteln.

Für präzise Messungen ist es vor Beginn der Nutzung einer derartigen Fahrzeugwaage 2 und üblicherweise auch anschließend in zeitlichen Abständen erforderlich, dass die Fahrzeugwaage 2 kalibriert wird. Zu diesem Zweck muss auf die Messplattform 3 eine möglichst genau bekannte Kraft ausgeübt werden und das Messergebnis der Kraftaufnehmer 4 mit dem vorgegebenen Belastungswert der möglichst genau bekannten Kraft verglichen werden. Die Verwendung einer Referenzmasse mit einem präzise bekannten Eigengewicht wird allerdings insbesondere bei Fahrzeugwaagen mit einem großen Messbereich, der auch für Lastkraftwagen oder schwere Nutzfahrzeuge geeignet ist, als unpraktisch empfunden.

Aus diesem Grund ist es aus dem Stand der Technik bekannt, für eine Kalibration seitlich neben der Messplattform 3 einen oder mehrere Kragarme 6 temporär zu errichten und mit dem Untergrund 1 zu verbinden, so dass ein näherungsweise horizontal verlaufendes Kragarmende 7 bis über die Messplattform 3 ragt. Zwischen dem Kragarmende 7 und der Messplattform 3 können dann ein üblicherweise hydraulisch betriebener Druckzylinder 8 und eine geeignete Kraftmesseinrichtung 9 angeordnet werden. Wenn der Druckzylinder 8 ausgefahren wird und dadurch eine Druckkraft auf die Messplattform 3 ausgeübt wird, kann die zu Kalibrationszwecken auf die Messplattform 3 ausgeübte Druckkraft mit der in dem Kraftfluss zwischen dem Kragarmende 7 und der Messplattform 3 angeordneten Kraftmesseinrichtung 9 erfasst und ausgewertet werden. Der über die eine Kraftmesseinrichtung 9 oder gegebenenfalls mit mehreren Druckzylindern 8 über die jeweils zugeordneten mehreren Kraftmesseinrichtungen 9 ermittelte Wert für die auf die Messplattform 3 ausgeübte Referenzbelastung kann dann mit den Ergebnissen der unter der Messplattform 3 angeordneten Kraftaufnehmer 4 verglichen und die Kraftaufnehmer 4 dadurch kalibriert werden.

Es hat sich gezeigt, dass während der Durchführung einer Kalibrationsmessung das Kragarmende 7 des Kragarms 6 oftmals auf Grund der Druckbelastung des Druckzylinders 8 geringfügig verformt und beispielsweise um einige Millimeter oder sogar mehr nach oben von der Messplattform 3 weg verbogen wird. Durch die Verformung des Kragarmendes 7 kann nicht mehr gewährleistet werden, dass die von dem Kragarmende 7 auf die Kraftmesseinrichtung 9 ausgeübte Druckkraft ausschließlich senkrecht zur Messplattform 3 gerichtet ist, was bei dem vorliegend beschriebenen Anwendungsfall der Krafthauptrichtung entspricht, so dass eine quer zu der Krafthauptrichtung gerichtete Kraftkomponente auf die Kraftmesseinrichtung 9 einwirkt. Diese Querkraftkomponente, die parallel zu einer Oberfläche der Messplattform 3 und senkrecht zu der Krafthauptrichtung gerichtet ist, kann die Präzision der Kraftmesseinrichtung 9 beeinträchtigen. Zudem führt die Querkraftkomponente dazu, dass die üblicherweise schwimmend gelagerte Messplattform 3 in Richtung der Querkraftkomponente ausgelenkt und seitlich verlagert wird. Dies kann zu einer weiteren Beeinträchtigung der Messergebnisse führen. In Figur 1 sind in einem lediglich schematisch dargestellten und hinsichtlich der einzelnen Beträge nicht maßstabsgetreuen Diagramm die während eines Kalibrationsvorgangs mit einem sich verformenden Kragarmende 7 auf die Kraftmesseinrichtung 9 ausgeübte Gesamtkraft 10, die in einem Winkel α zur Krafthauptrichtung 11 auf die Kraftmesseinrichtung 9 einwirkt, die längs der Krafthauptrichtung 11 wirkende Druckkraftkomponente 12 und die quer zu der Druckkraftkomponente 12 gerichtete Querkraftkomponente 13 angedeutet. Die Querkraftkomponente 13 führt zu der unerwünschten Verlagerung der Messplattform 3, auf welcher die mit dieser Querkraftkomponente 13 beaufschlagte Kraftmesseinrichtung 9 abgestützt ist.

Durch die Verwendung einer erfindungsgemäßen Kraftmesseinrichtung 14, wie es schematisch in Figur 2 dargestellt ist, kann auch bei einer Verformung des Kragarmendes 7 verhindert werden, dass die auf die erfindungsgemäße Kraftmesseinrichtung 14 ausgeübte Gesamtkraft 10 zu einer übermäßigen Beeinträchtigung der Messergebnisse und zu einer in Richtung der Querkraftkomponente 13 gerichteten Verlagerung der Messplattform 3 während eines Kalibrationsvorgangs führt.

Die von dem Kragarmende 7 auf die erfindungsgemäße Kraftmesseinrichtung 14 übertragene Querkraftkomponente 13 wird auf Grund der erfindungsgemäßen Konstruktion der Kraftmesseinrichtung 14 durch eine in entgegengesetzter Richtung wirkende Kraftkomponente 15 kompensiert, so dass auf den unter der Kraftmesseinrichtung 14 angeordneten Druckzylinder 8 und insbesondere auf die darunter angeordnete Messplattform 3 keine Querkraftkomponente 13 übertragen wird, die zu einer seitlichen Verlagerung der Messplattform 3 führen könnte.

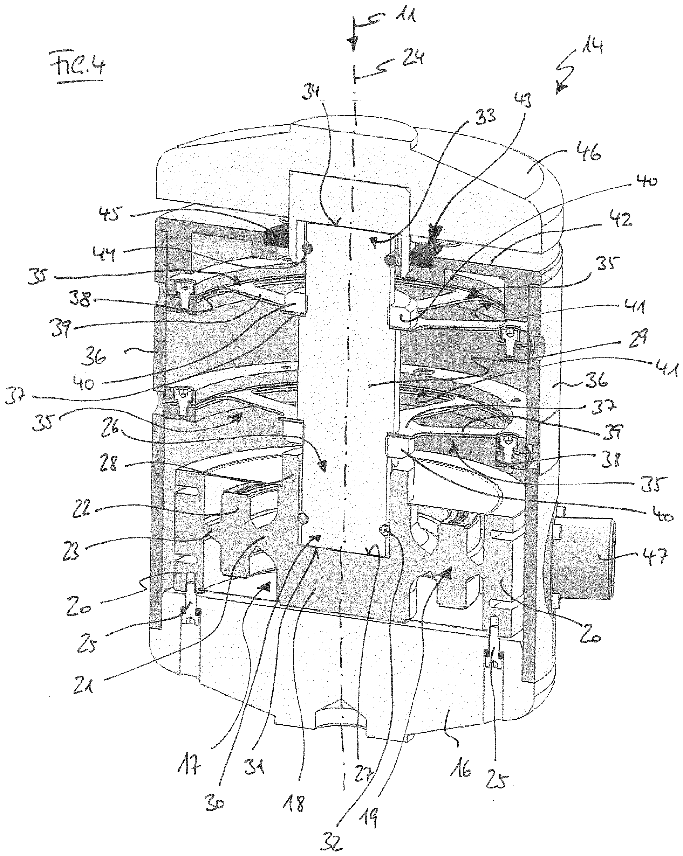

In Figur 4 ist eine Schnittansicht durch eine exemplarische Ausgestaltungsvariante der erfindungsgemäßen Kraftmesseinrichtung 14 dargestellt. Auf einem Gehäuseboden 16 ist ein rotationssymmetrisch ausgebildeter Kraftmesskörper 17 festgelegt. Der Kraftmesskörper 17 weist ein inneres Krafteinleitungselement 18 auf, das über einen Verformungskörper 19 in einen konzentrisch darum angeordneten äußeren Kraftausleitungsring 20 übergeht. Der Kraftausleitungsring 20 ist über seine dem Gehäuseboden 16 zugewandte Ringbodenfläche starr und kraftübertragend mit dem Gehäuseboden 16 verbunden. Ausgehend von dem inneren Krafteinleitungselement 18 weist der Verformungskörper 19 einen inneren Ringsteg 21, einen mit nicht dargestellten Dehnungsmesselementen bestückten Biegering 22 und einen äußeren Ringsteg 23 auf, der wiederum in den äußeren Kraftausleitungsring 20 übergeht. Der innere Ringsteg 21, der Biegering 22, der äußere Ringsteg 23 und der äußere Kraftausleitungsring 20 sind jeweils rotationssymmetrisch ausgebildet und konzentrisch um eine mittig durch das innere Krafteinleitungselement 18 verlaufende Mittenachse 24 angeordnet. Die Mittenachse 24 verläuft in der Krafthauptrichtung 11.

Der Kraftmesskörper 17 mit dem inneren Krafteinleitungselement 18, mit dem Verformungskörper 19 und mit dem äußeren Kraftausleitungsring 20 ist einstückig ausgebildet und über Befestigungsschrauben 25, die mit dem äußeren Kraftausleitungsring 20 in Eingriff sind, an dem Gehäuseboden 16 festgelegt. Dabei kann das innere Krafteinleitungselement 18 in axialer Richtung ausgelenkt werden, wobei dadurch eine Verformung des Verformungskörpers 19 und insbesondere des Biegerings 22 erzwungen wird, die mit den nicht dargestellten Dehnungsmesselementen erfasst und einer Auswertung zugeführt werden kann.

Das innere Krafteinleitungselement 18 weist eine topfartig ausgebildete Ausnehmung 26 auf. Eine Bodenfläche der Ausnehmung 26 bildet eine Krafteinleitungsfläche 27, die von einer ringartigen Umwandung 28 umgeben und begrenzt ist. Ein stabförmiges Kraftübertragungselement 29 ist mit einem ersten Ende 30 in der Ausnehmung 26 derart angeordnet, dass sich eine konvex gekrümmte erste Stirnfläche 31 auf der Krafteinleitungsfläche 27 kraftübertragend abstützt. Durch ein elastisches ringförmiges Verformungselement 32 wird das erste Ende 30 des Kraftübertragungselements 29 seitlich, bzw. in radialer Richtung an der ringartigen Umwandung 28 abgestützt und eine seitliche Verlagerung sowie ein unmittelbarer Kontakt des Kraftübertragungselement 29 mit der ringartigen Umwandung 28 verhindert.

Ein dem ersten Ende 30 gegenüberliegendes zweites Ende 33 des Kraftübertragungselements 29 ragt längs der Mittenachse 24 aus der Ausnehmung 26 heraus. Das zweite Ende 33 weist ebenfalls eine konvex gekrümmte zweite Stirnfläche 34 auf. Durch eine auf die zweite Stirnfläche 34 ausgeübte Krafteinwirkung drückt die gegenüberliegende erste Stirnfläche 31 auf die Krafteinleitungsfläche 27 des inneren Krafteinleitungselements 18 und bewirkt bei einer axialen Verlagerung des Kraftübertragungselements 29 eine Auslenkung des inneren Krafteinleitungselements 18 in der Krafthauptrichtung 11 und damit einhergehend eine messbare Verformung des Biegerings 22.

Das Kraftübertragungselement 29 ist über zwei in axialer Richtung beabstandet von dem inneren Krafteinleitungselement 18 und beabstandet voneinander angeordnete Radialstützelemente 35 an einer das Kraftübertragungselement 29 hülsenförmig umgebenden Gehäusewandung 36 abgestützt. Die Gehäusewandung 36 ist starr mit dem Gehäuseboden 16 und damit auch starr mit dem äußeren Kraftausleitungsring 20 verbunden. Jedes der beiden Radialstützelemente 35 weist einen inneren Festlegungsring 37 und einen äußeren Festlegungsring 38 auf, die über eine Anzahl von in radialer Richtung verlaufender Verbindungsstege 39 miteinander verbunden sind. Die derart ausgebildeten Radialstützelemente 35, die aus einem kreisförmigen Blechzuschnitt mit nachträglich eingebrachten Aussparungen hergestellt werden können, weisen in axialer Richtung längs der Mittenachse 24 biegeelastische Eigenschaften und in radialer Richtung auf Grund der radial steifen Verbindungsstege 39 verformungssteife Eigenschaften auf.

Der innere Festlegungsring 37 ist über einen Gewindeeingriff eines Klemmrings 40 mit dem Kraftübertragungselement 29 verbunden, sodass in radialer Richtung wirkende Kräfte zuverlässig von dem Kraftübertragungselement 29 auf den inneren Festlegungsring 37 übertragen werden können. Bei einer in axialer Richtung beabstandeten Anordnung von zwei Radialstützelementen 35 kann das Kraftübertragungselement 29 eine radial abgestufte Formgebung aufweisen, um die beiden Radialstützelemente 35 mit dem jeweils einen identischen Durchmesser aufweisenden inneren Festlegungsring 37 von beiden Enden 30 und 33 auf das Kraftübertragungselement 29 aufschieben und über den Gewindeeingriff eines daran angepassten Klemmrings 40 an dem Kraftübertragungselement 29 festlegen zu können. Die beiden Radialstützelemente 35 sind längs eines äußeren Umfangs des äußeren Festlegungsrings 37 in einer daran angepassten und in Umfangsrichtung an der Gehäusewandung 36 ausgebildeten Nut 41 klemmend festgelegt.

Durch die erfindungsgemäß angeordneten Radialstützelemente 35 wird ein unerwünschtes Verkippen des Kraftübertragungselements 29 relativ zu der Mittenachse 24 verhindert, sodass das Kraftübertragungselement 29 während eines Messvorgangs immer in der Krafthauptrichtung 11 ausgerichtet ist und nahezu ausschließlich die in der Krafthauptrichtung 11 gerichtete Druckkraftkomponente 12 übertragen kann, während eine auf das Kraftübertragungselement 29 ausgeübte Querkraftkomponente 13 über die Radialstützelemente 35 und die Gehäusewandung 36 abgeleitet wird und nicht auf den Kraftmesskörper 17 einwirkt.

Das Gehäuse ist an einer dem Gehäuseboden 16 gegenüberliegenden Seite durch einen Gehäusedeckel 42 verschlossen, wobei der Gehäusedeckel 42 eine mittig angeordnete Aussparung 43 aufweist, durch welche das zweite Ende 33 des stabförmigen Kraftübertragungselements 29 hinausragt. Das Kraftübertragungselement 29 ist über zwei konzentrisch angeordnete ringförmige elastische Verformungselemente 44, 45 in der Aussparung 43 geführt, wobei die elastischen Verformungselemente 44, 45 eine Abdichtung bewirken und zusätzlich einer Verkippung des Kraftübertragungselements 29 aus der Mittenachse 24 heraus entgegenwirken. Auf der zweiten Stirnfläche 34 des Kraftübertragungselements 29 ist eine Kappe 46 lose aufgesetzt. Die Kappe 46 stützt sich längs der Krafthauptrichtung 11 auf der konvex gekrümmten zweiten Stirnfläche 34 des Kraftübertragungselements 29 ab und wird klemmend und in radialer Richtung geführt von den beiden Verformungselementen 44, 45 gehalten.

Über einen in der Gehäusewandung 36 angeordneten Anschlussstutzen 47 können elektrisch leitende Verbindungskabel signalübertragend in das Gehäuse der Kraftmesseinrichtung 9 hineingeführt und an die Dehnungsmesselemente auf dem Biegering 22 angeschlossen werden. Auch eine drahtlose Datenübertragung der Messsignale der Dehnungsmesselemente an eine externe Auswerteeinrichtung ist möglich.

## Patentansprüche

1. Kraftmesseinrichtung (14) zur Erfassung einer in einer Krafthauptrichtung (11) auf die Kraftmesseinrichtung (14) einwirkenden Druckkraft mit einem rotationssymmetrischen Kraftmesskörper (17), wobei ein äußerer Kraftausleitungsring (20) über einen Verformungsmesselemente tragenden Verformungskörper (19) mit einem inneren Krafteinleitungselement (18) verbunden ist, und wobei das innere Krafteinleitungselement (18) eine Krafteinleitungsfläche (27) aufweist, auf der ein erstes Ende (30) eines stabförmigen Kraftübertragungselements (29) kraftübertragend derart angeordnet ist, dass ein dem ersten Ende (30) gegenüberliegendes zweites Ende (33) des Kraftübertragungselements (29) entgegen der Krafthauptrichtung (11) von dem inneren Krafteinleitungselement (18) absteht und eine auf das zweite Ende (33) des Kraftübertragungselements (29) einwirkende Druckkraft über die Krafteinleitungsfläche (27) auf den Kraftmesskörper (17) übertragen kann, wobei längs einer in der Krafthauptrichtung (11) durch das innere Krafteinleitungselement (18) verlaufenden Mittenachse (24) zwei oder mehr Radialstützelemente (35) jeweils beabstandet voneinander und beabstandet von dem inneren Krafteinleitungselement (18) angeordnet sind, welche in axialer Richtung biegeelastisch und in radialer Richtung verformungssteif ausgebildet sind, wobei die Radialstützelemente (35) kraftübertragend an dem Kraftübertragungselement (29) anliegen, sich radial nach außen erstrecken und an einem radial äußeren Ende kraftübertragend an einem starr mit dem äußeren Kraftausleitungsring (20) verbundenen Stützkörper festgelegt sind, sodass die Radialstützelemente (35) einem Verkippen des Kraftübertragungselements (29) aus der Mittenachse (24) entgegenwirken, **dadurch gekennzeichnet, dass** jedes der zwei oder mehr Radialstützelemente (35) einen inneren Festlegungsring (37) und einen äußeren Festlegungsring (38) aufweist, die über in radialer Richtung verlaufende Verbindungsstege (39) miteinander verbunden sind.

2. Kraftmesseinrichtung (14) nach Anspruch 1, **dadurch gekennzeichnet, dass** jedes der zwei oder mehr Radialstützelemente (35) von einer flachen Scheibe mit darin angeordneten Ausnehmungen gebildet wird.

3. Kraftmesseinrichtung (14) nach Anspruch 1 oder Anspruch 2, **dadurch gekennzeichnet, dass** der Verformungskörper (19) einen mit dem äußeren Kraftausleitungring (20) verbundenen äußeren Ringsteg (23) aufweist, der mit einem Dehnungsmesselemente tragenden Biegering (22) verbunden ist, der wiederum über einen inneren Ringsteg (21) mit dem inneren Krafteinleitungselement (18) verbunden ist, wobei der äußere Ringsteg (23) und der innere Ringsteg (21) jeweils ein Biegegelenk bilden, und wobei ausgehend von dem inneren Krafteinleitungselement (18) der innere Ringsteg (21), der Biegering (22), der äußere Ringsteg (23) und der äußere Kraftausleitungsring (20) jeweils mit zunehmendem radialen Abstand konzentrisch um die Mittenachse (24) angeordnet sind.

4. Kraftmesseinrichtung (14) nach einem der vorangehenden Ansprüche, **dadurch gekennzeichnet, dass** die Kraftmesseinrichtung (14) ein Gehäuse aufweist, wobei das Gehäuse einen Gehäuseboden (16) aufweist und der äußere Kraftausleitungsring (20) des Kraftmesskörpers (17) auf dem Gehäuseboden (16) festgelegt ist, und wobei das Gehäuse eine den Kraftmesskörper (17) umgebende Gehäusewandung (36) aufweist, die starr mit dem Gehäuseboden (16) verbunden ist und den Stützkörper zur Festlegung des mindestens einen Radialstützelements (35) bildet.

5. Kraftmesseinrichtung (14) nach Anspruch 4, **dadurch gekennzeichnet, dass** das Gehäuse einen Gehäusedeckel (42) mit einer Aussparung (43) aufweist, durch welche das zweite Ende (33) des Kraftübertragungselements (29) hinausragt.

6. Kraftmesseinrichtung (14) nach einem der vorausgehenden Ansprüche, **dadurch gekennzeichnet, dass** das Kraftübertragungselement (29) gesondert von dem Kraftmesskörper (17) hergestellt ist und sich mit einer an dem ersten Ende (30) ausgebildeten Stirnfläche (31) kraftübertragend an der Krafteinleitungsfläche (27) abstützt, die von einer Bodenfläche in einer Ausnehmung (26) in dem inneren Krafteinleitungselement (18) gebildet ist.

7. Kraftmesseinrichtung (14) nach einem der vorausgehenden Ansprüche, **dadurch gekennzeichnet, dass** das Kraftübertragungselement (29) an seinem zweiten Ende (33) eine konvex gekrümmte Stirnfläche (34) aufweist.

8. Kraftmesseinrichtung (14) nach einem der vorausgehenden Ansprüche, dass das Kraftübertragungselement (29) über eine oder mehrere elastische Verformungselemente (32, 44, 45) radial gegenüber dem inneren Krafteinleitungselement (18) abgestützt ist.

## Claims

1. Force measuring device (14) for detecting a compressive force acting on the force measuring device (14) in a main force direction (11) by means of a rotationally symmetrical force measuring body (17), wherein an outer force output ring (20) is connected to an inner force input element (18) by way of a deformation body (19) carrying deformation measuring elements, and wherein the inner force input element (18) comprises a force input surface (27) on which a first end (30) of a rod-shaped force-transmitting element (29) is arranged in a force-transmitting manner in such a way that a second end (33) of the force-transmitting element (29) opposite the first end (30) projects from the inner force input element (18) against the main force direction (11) and can transmit a compressive force acting on the second end (33) of the force-transmitting element (29) to the force measuring body (17) by way of the force input surface (27), wherein two or more radial support elements (35) are arranged along a central axis (24) extending through the inner force input element (18) in the main force direction (11) such that they are each spaced apart from one another and spaced apart from the inner force input element (18), said radial support elements (35) being configured so as to be flexible in the axial direction and rigid in the radial direction, wherein the radial support elements (35) abut the force-transmitting element (29) in a force-transmitting manner, extend radially outwards and are fixed in a force-transmitting manner at a radially outer end to a support body which is rigidly connected to the outer force output ring (20) such that the radial support elements (35) counteract a tilting of the force-transmitting element (29) from the central axis (24), **characterised in that** each of the two or more radial support elements (35) comprises an inner fixing ring (37) and an outer fixing ring (38), which are connected to each other by way of connecting webs (39) extending in a radial direction.

2. Force measuring device (14) according to claim 1, **characterised in that** each of the two or more radial support elements (35) is formed by a flat disc with recesses arranged therein.

3. Force measuring device (14) according to claim 1 or claim 2, **characterised in that** the deformation body (19) comprises an outer annular web (23) connected to the outer force output ring (20), said outer annular web (23) being connected to a bending ring (22) carrying strain measuring elements, which is in turn connected to the inner force input element (18) by way of an inner annular web (21), wherein the outer annular web (23) and the inner annular web (21) each form a flexural joint and wherein, starting from the inner force input element (18), the inner annular web (21), the bending ring (22), the outer annular web (23) and the outer force output ring (20) are each arranged concentrically around the central axis (24) at increasing radial distances.

4. Force measuring device (14) according to one of the preceding claims, **characterised in that** the force measuring device (14) comprises a housing, wherein the housing comprises a housing base (16) and the outer force output ring (20) of the force measuring body (17) is fixed on the housing base (16), and wherein the housing comprises a housing wall (36) surrounding the force measuring body (17), which housing wall (36) is rigidly connected to the housing base (16) and forms the support body for fixing the at least one radial support element (35) .

5. Force measuring device (14) according to claim 4, **characterised in that** the housing comprises a housing cover (42) with an opening (43) through which the second end (33) of the force-transmitting element (29) protrudes.

6. Force measuring device (14) according to one of the preceding claims, **characterised in that** the force-transmitting element (29) is produced separately from the force measuring body (17) and bears with an end face (31) formed at the first end (30) against the force input surface (27) in a force-transmitting manner, said force input surface (27) being formed by a base surface in a recess (26) in the inner force input element (18).

7. Force measuring device (14) according to one of the preceding claims, **characterised in that** the force-transmitting element (29) has a convexly curved end face (34) at its second end (33).

8. Force measuring device (14) according to one of the preceding claims, **characterised in that** the force-transmitting element (29) is supported radially with respect to the inner force input element (18) by way of one or more elastic deformation elements (32, 44, 45).

## Revendications

1. Dispositif dynamométrique (14) destiné à détecter une force de poussée agissant sur le dispositif dynamométrique (14) dans une direction principale de force (11), au moyen d'un corps dynamométrique (17) à symétrie de révolution, dans lequel un anneau de redirection de force extérieur (20) est relié à un élément d'introduction de force intérieur (18) par le biais d'un corps de déformation (19) portant des éléments de mesure de déformation, et dans lequel l'élément d'introduction de force intérieur (18) comporte une surface d'introduction de force (27), sur laquelle est disposée une première extrémité (30) d'un élément de transmission de force (29) en forme de barre de façon à transmettre une force de telle manière qu'une seconde extrémité (33) opposée à la première extrémité (30) de l'élément de transmission de force (29) dépasse de l'élément d'introduction de force intérieur (18) à l'opposé de la direction principale de force (11) et peut transmettre au corps dynamométrique (17) une force de poussée agissant sur la seconde extrémité (33) de l'élément de transmission de force (29) par le biais de la surface d'introduction de force (27), dans lequel, le long d'un axe central (24) s'étendant dans la direction principale de force (11) à travers l'élément d'introduction de force intérieur (18), deux éléments de support radiaux (35) ou plus sont disposés respectivement à distance les uns des autres et à distance de l'élément d'introduction de force intérieur (18), lesquels sont réalisés élastiques en flexion dans la direction axiale et résistant à la déformation dans la direction radiale, dans lequel les éléments de support radiaux (35) s'appliquent contre l'élément de transmission de force (29) de façon à transmettre une force, s'étendent radialement vers l'extérieur et sont fixés, par une extrémité radialement extérieure, de façon à transmettre une force, à un corps de support relié de manière rigide à l'anneau de redirection de force extérieur (20), de telle sorte que les éléments de support radiaux (35) agissent contre un basculement de l'élément de transmission de force (29) hors de l'axe central (24), **caractérisé en ce que** chacun des deux éléments de support radiaux (35) ou plus comporte un anneau de fixation intérieur (37) et un anneau de fixation extérieur (38), qui sont reliés l'un à l'autre par le biais d'éléments de liaison (39) s'étendant dans la direction radiale.

2. Dispositif dynamométrique (14) selon la revendication 1, **caractérisé en ce que** chacun des deux éléments de support radiaux (35) ou plus sont formés par un disque plat avec des cavités disposées dans celui-ci.

3. Dispositif dynamométrique (14) selon la revendication 1 ou la revendication 2, **caractérisé en ce que** le corps de déformation (19) comporte une partie annulaire extérieure formant pont (23) reliée à l'anneau de redirection de force extérieur (20), laquelle est reliée à un anneau de flexion (22) portant des éléments extensomètres, lequel est de son côté relié à l'élément d'introduction de force intérieur (18) par le biais d'une partie annulaire intérieure formant pont (21), la partie annulaire extérieure formant pont (23) et la partie annulaire intérieure formant pont (21) formant respectivement un joint articulé de flexion, et dans lequel la partie annulaire intérieure formant pont (21), l'anneau de flexion (22), la partie annulaire extérieure formant pont (23) et l'anneau de redirection de force extérieur (20) sont disposés, à partir de l'élément d'introduction de force intérieur (18), de manière concentrique autour de l'axe central (24) respectivement avec un écartement radial croissant.

4. Dispositif dynamométrique (14) selon l'une des revendications précédentes, **caractérisé en ce que** le dispositif dynamométrique (14) comporte un boîtier, le boîtier comportant un fond de boîtier (16) et l'anneau de redirection de force extérieur (20) du corps dynamométrique (17) étant fixé sur le fond de boîtier (16), et le boîtier comportant une paroi de boîtier (36) entourant le corps dynamométrique (17), qui est reliée de manière rigide au fond de boîtier (16) et qui forme le corps de support pour la fixation de l'au moins un élément de support radial (35).

5. Dispositif dynamométrique (14) selon la revendication 4, **caractérisé en ce que** le boîtier comporte un couvercle de boîtier (42) avec un évidement (43), à travers duquel la seconde extrémité (33) de l'élément de transmission de force (29) fait saillie vers l'extérieur.

6. Dispositif dynamométrique (14) selon l'une des revendications précédentes, **caractérisé en ce que** l'élément de transmission de force (29) est fabriqué séparément du corps dynamométrique (17) et s'appuie, avec une surface frontale (31) réalisée sur la première extrémité (30), de façon à transmettre une force, sur la surface d'introduction de force (27), qui est formée par une surface de fond dans un évidement (26) dans l'élément d'introduction de force intérieur (18).

7. Dispositif dynamométrique (14) selon l'une des revendications précédentes, **caractérisé en ce que** l'élément de transmission de force (29) comporte, sur sa seconde extrémité (33), une surface frontale (34) courbée de manière convexe.

8. Dispositif dynamométrique (14) selon l'une des revendications précédentes, **caractérisé en ce que** l'élément de transmission de force (29) est supporté radialement par rapport à l'élément d'introduction de force intérieur (18) par le biais d'un ou plusieurs éléments de déformation élastiques (32, 44, 45).
